# FASCICULE DE BREVET EUROPEEN

(11) **EP 2 078 631 B1**
(45) Date de publication et mention de la délivrance du brevet: **25.08.2010**
(21) Numéro de dépôt: 08171683.9
(22) Date de dépôt: 15.12.2008
(51) Int. Cl.: B60J 10/00, B60J 10/08

(54) **Dispositif d'étanchéité pour pièce de carrosserie, pourvu d'une butée de positionnnement pour un joint d'étanchéité**
Abdichtungsvorrichtung für ein Karosserieteil, die mit einem Positionieranschlag für eine Dichtung ausgestattet ist
Sealing device for a body part, equipped with a positioning stop for a seal

(30) Priorité: 11.01.2008 FR 0850176
(43) Date de publication de la demande: 15.07.2009
(73) Titulaire: Peugeot Citroën Automobiles S.A., 78140 Vélizy Villacoublay (FR)
(72) Inventeur: Arnaud, Laurent, 70110, MIGNAFANS (FR)
(74) Mandataire: Allain, Laurent

(56) Documents cités:
- EP-A- 0 829 385
- EP-A- 1 452 373

## Description

La présente invention concerne un dispositif d'étanchéité pour pièce de carrosserie.

Un tel joint d'étanchéité est généralement fabriqué en un matériau élastomère ou thermoplastique et garantit une étanchéité entre la pièce de carrosserie sur laquelle il est monté, et une deuxième pièce, complémentaire de cette pièce de carrosserie.

Par exemple, ce joint est positionné entre une porte latérale d'un véhicule automobile et l'encadrement obturé par cette porte dans une position de fermeture.

Plus précisément, un joint de ce type ou lécheur comprend un corps profilé qui vient s'emboîter le long de la feuillure de la pièce de carrosserie.

Le corps du lécheur souvent renforcé par une armature, présente une section droite en U avec deux branches parallèles formant pince pour assurer la fixation du corps par emboîtement sur la feuillure de la pièce.

Pour assurer encore une meilleure tenue du corps du lécheur autour de la feuillure, on prévoit généralement des moyens de retenue complémentaires sous la forme de nervures prévues sur les parois internes des deux branches du corps du lécheur qui viennent en appui et/ou se loger dans des empreintes ménagées dans la feuillure.

Le mode de fixation du joint sur la feuillure se fait par emboîtement du lécheur sur cette feuillure.

Plus précisément, le lécheur est disposé en vis à vis de la feuillure de la pièce, avec l'ouverture des deux branches parallèles dirigée vers cette feuillure. On déplace cette première extrémité du lécheur le long de la feuillure jusqu'à ce que cette extrémité atteigne une position désirée et on emboîte la première extrémité du lécheur sur la feuillure à cette position désirée. On rabat ensuite le reste du lécheur contre la feuillure pour qu'il vienne pincer sur toute sa longueur la feuillure.

Ce mode de fixation par emboîtement permet notamment de faciliter l'échange du lécheur en après-vente.

Cependant, c'est par un contrôle visuel que l'arrivée de l'extrémité du lécheur à la position désirée est déterminée.

Ce contrôle visuel indispensable n'est pas fiable et ralentit la cadence de fixation du joint sur la feuillure. Le document EP 0 829 385 A décrit un dispositif d'étanchéité selon le préambule de la revendication 1.

L'invention vise à pallier ce problème.

A cet effet, l'invention concerne un dispositif d'étanchéité pour pièce de carrosserie comprenant la pièce de carrosserie, un joint d'étanchéité monté sur une feuillure de la pièce, la feuillure s'étendant selon une direction principale.

Selon l'invention, le dispositif comprend une butée de positionnement du joint d'étanchéité selon la direction principale formée sur la feuillure.

Cette butée permet d'arrêter le déplacement de l'extrémité du joint le long de la feuillure juste à la position désirée, sans contrôle visuel mais grâce à un élément intrinsèque de la feuillure.

Selon une autre caractéristique, le joint présente en section transversale une forme en U et la butée de positionnement s'étend dans le plan défini par la feuillure, la partie centrale du U du joint venant en butée contre la butée de positionnement lors du montage du joint sur la feuillure.

De préférence, la feuillure comprend une portion d'accueil du joint d'étanchéité, la butée de positionnement étant formée d'une seule pièce avec la portion d'accueil.

Selon un mode de réalisation avantageux, le dispositif comprend une découpe d'encliquetage réalisée à partir du bord libre de la feuillure, et le joint d'étanchéité comprend un moyen d'encliquetage complémentaire tel qu'un ergot coopérant avec la découpe d'encliquetage de la feuillure afin de verrouiller le joint à la position en butée.

De préférence, la butée de positionnement est disposée à une extrémité de la feuillure.

D'autres buts, avantages et caractéristiques de l'invention apparaîtront dans la description qui suit, illustrée par les figures suivantes :
- la figure 1 représente une vue partielle de face d'une pièce de carrosserie de véhicule automobile munie d'une dispositif selon l'invention,
- la figure 2 est une vue analogue à celle de la figure 1, illustrant la pièce de la figure 1 avec un joint d'étanchéité emboîté sur celle-ci, la partie de la pièce pincée par ce joint étant rendue visible par transparence ;
- la figure 3 montre la pièce et le joint de la figure 2 sans transparence.

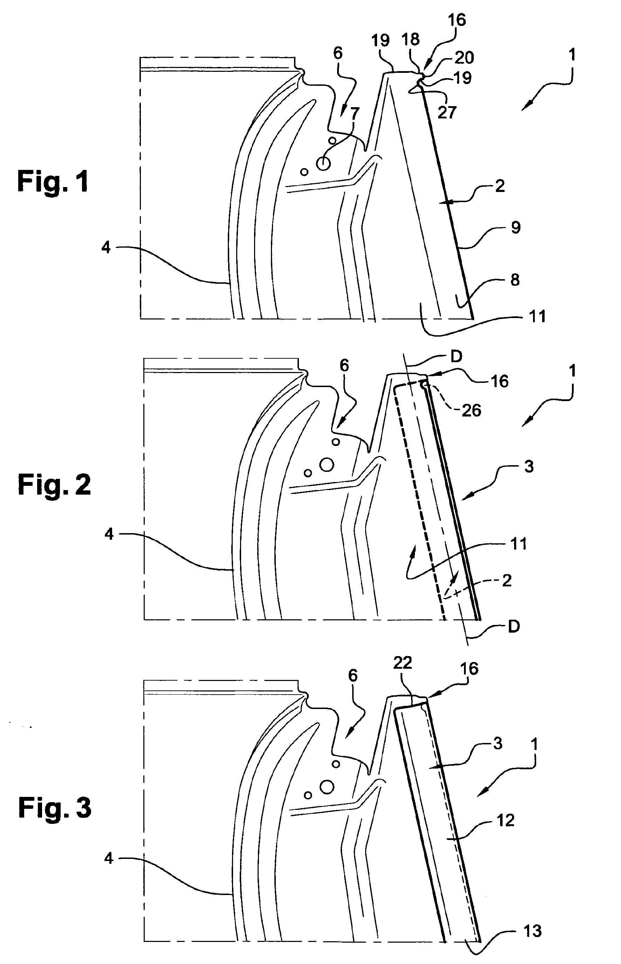

La figure 1 représente une pièce de carrosserie 1 d'un véhicule automobile pourvue d'une feuillure de support 2 d'un joint d'étanchéité 3 qui est visible sur les figures 2 et 3.

Cette pièce 1 constitue dans l'exemple représenté sur les figures, la partie haute d'un pied arrière de véhicule.

Cette pièce comprend un rebord curviligne 4, la feuillure d'accueil 2 du joint, s'étendant le long du rebord 4 et à un niveau inférieur à ce rebord 4, et, interposée entre la feuillure 2 et le rebord 4, une plateforme de transition 6.

La feuillure 2 de la pièce 1 comprend une portion d'accueil 8 du joint se présentant sous la forme d'une plaque s'étendant selon une direction principale D et pourvue d'un bord libre d'engagement 9 pour le joint et une portion de solidarisation 11 à la plateforme de transition 6.

Le joint d'étanchéité 3 comprend un corps principal 12 souvent renforcé par une armature, et présentant une section droite en U avec deux branches parallèles 13 formant pince pour assurer la fixation du corps 12 par emboîtement sur la feuillure 2.

Le joint 3 comprend de préférence des nervures de retenue 16 prévues sur les parois internes des deux branches 13 du joint.

Dans l'exemple représenté, ce joint 3 lorsque emboîté sur la feuillure 2 de la pièce 1, assure l'étanchéité entre la pièce de carrosserie 1 et le capot du véhicule, et permet d'éviter toute introduction des eaux de pluie sous le capot.

Afin de faciliter et d'accélérer le positionnement du joint 3 le long de la feuillure, celle-ci comprend une butée de positionnement 16 du joint 3 selon la direction principale de la feuillure 2.

Plus précisément, cette butée 16 est venue de matière avec la portion d'accueil 8 du joint et s'étend dans le plan défini par cette portion 8, au-delà du bord libre 9 de la feuillure.

Elle présente par exemple une forme générale rectangulaire et dépasse latéralement de quelques millimètres du bord libre 9.

Elle comprend un bord libre latéral 17 coïncidant avec un bord libre latéral 18 de la portion d'accueil 8, un bord libre latéral d'arrêt 19 venant rejoindre le bord libre longitudinal 9 de la feuillure 2 et un bord 20 sensiblement parallèle au bord libre 9 de la feuillure et interposé entre les deux premiers bords 18, 19.

Le bord d'arrêt 19 de la butée 16 est celui que l'extrémité 22 du joint d'étanchéité 3 rencontre sur le chemin de son emboîtement sur la feuillure. Plus précisément, c'est la partie centrale de la forme de U du joint qui vient en butée contre le bord d'arrêt 19 de la butée de positionnement 16.

Le déplacement de cette extrémité 22 est ainsi stoppé à une position prédéterminée définie par l'emplacement du bord d'arrêt 19 de la butée 16.

Avantageusement, des moyens d'encliquetage complémentaires 26, 27, peuvent être prévus pour que l'extrémité d'attaque 22 du joint soit encliquetée à sa position en butée.

Par exemple, le premier moyen d'encliquetage pourra être constitué d'un ergot 26 logé sur la paroi interne de la partie de liaison des deux branches 13 du joint 3 et le moyen d'encliquetage complémentaire 27 pourra dans ce cas prendre la forme d'une découpe circulaire 27 dans laquelle l'ergot du joint peut venir se loger.

Une fois cette extrémité 22 du joint bloquée par les moyens d'encliquetage, il suffit de rabattre le reste du joint contre la feuillure 2 en rapprochant par exemple l'extrémité opposée du joint de la feuillure 2.

Le joint est ainsi facilement et rapidement mis en place à la position désirée sur la feuillure 2.

Bien entendu, selon les besoins, la butée pourra être positionnée à n'importe quel emplacement sur la feuillure.

De même, elle pourra présenter n'importe quelle forme, pourvu qu'elle définisse un bord d'arrêt apte à bloquer le déplacement de l'extrémité 22 du joint le long du bord libre 9.

Bien évidemment, la pièce à laquelle le dispositif selon l'invention est destiné peut être n'importe quel type de pièce de carrosserie, notamment d'un véhicule, fermant un encadrement ou définissant cet encadrement.

Par exemple, cette pièce pourra constituer un encadrement obturé par le hayon arrière d'un véhicule automobile, ou le hayon lui-même, un encadrement obturé par une porte ou par une baie, ou la porte elle-même.

## Revendications

1. Dispositif d'étanchéité pour pièce de carrosserie comprenant la pièce de carrosserie, un joint d'étanchéité monté sur une feuillure de la pièce, la feuillure s'étendant selon une direction principale (D), et une butée de positionnement (16) du joint d'étanchéité (3) selon la direction principale (D), cette butée (16) étant formée sur la feuillure (2), ladite feuillure (2) comprenant une portion d'accueil (8) du joint d'étanchéité (3) et la butée de positionnement (16) étant formée d'une seule pièce avec la portion d'accueil (8), **caractérisé en ce qu'**il comprend une découpe d'encliquetage (27) réalisée à partir du bord libre (9) de la feuillure (2), et **en ce que** le joint d'étanchéité (3) comprend un moyen d'encliquetage complémentaire (26) coopérant avec la découpe d'encliquetage (27) de la feuillure (2) afin de verrouiller le joint (3) à la position en butée.

2. Dispositif selon la revendication 1, **caractérisé en ce que** le joint présente en section transversale une forme en U et **en ce que** la butée de positionnement (16) s'étend dans le plan défini par la feuillure (2), la partie centrale du U du joint venant en butée contre la butée de positionnement (16) lors du montage du joint (3) sur la feuillure (2).

3. Dispositif selon l'une des revendications précédentes, **caractérisé en ce que** la butée de positionnement (16) est disposée à une extrémité de la feuillure.

## Claims

1. Sealing device for a bodywork part, comprising the body work part, a sealing joint mounted on a rabbet of the part, the rabbet extending along a main direction (D), and a positioning stop (16) of the sealing joint (3) along the main direction (D), this stop (16) being formed on the rabbet (2), the said rabbet (2) comprising a receiving section (8) of the sealing joint (3), and the positioning stop (16) being formed in a single piece with the receiving section (8), **characterized in that** it comprises a detent cutout (27) realized from the free edge (9) of the rabbet (2), and **in that** the sealing joint (3) comprises a complementary detent means (26) cooperating with the detent cutout (27) of the rabbet (2) so as to lock the joint (3) in the abutting position.

2. Device according to Claim 1, **characterized in that** the joint has a U shape in cross-section and **in that** the positioning stop (16) extends in the plane defined by the rabbet (2), the central part of the U of the joint coming into abutment against the positioning stop (16) on mounting of the joint (3) on the rabbet (2).

3. Device according to one of the preceding claims, **characterized in that** the positioning stop (16) is arranged at one end of the rabbet.

## Patentansprüche

1. Abdichtvorrichtung für Karosserieteil, die den Karosserieteil, eine Dichtung, die auf einen Falz des Teils montiert ist, wobei sich der Falz entlang einer Hauptrichtung (D) erstreckt, und einen Positionieranschlag (16) der Dichtung (3) entlang der Hauptrichtung (D) aufweist, wobei dieser Anschlag (16) auf dem Falz (2) ausgebildet ist, wobei der Falz (2) einen Aufnahmeabschnitt (8) der Dichtung (3) aufweist, und wobei der Positionieranschlag (16) aus einem Stück mit dem Aufnahmeabschnitt (8) ausgebildet ist, **dadurch gekennzeichnet, dass** sie einen Einrastausschnitt (27) aufweist, der ausgehend von dem freien Rand (9) des Falzes (2) hergestellt ist, und dass die Dichtung (3) ein komplementäres Einrastmittel (26) aufweist, das mit dem Einrastausschnitt (27) des Falzes (2) zusammenwirkt, um die Dichtung (3) in der Anschlagsposition zu verriegeln.

2. Vorrichtung nach Anspruch 1, **dadurch gekennzeichnet, dass** die Dichtung im Querschnitt eine U-Form aufweist, und dass sich der Positionieranschlag (16) in der Ebene erstreckt, die von dem Falz (2) definiert wird, wobei der zentrale Teil des U der Dichtung bei der Montage der Dichtung (3) auf den Falz (2) gegen den Positionieranschlag (16) anschlägt.

3. Vorrichtung nach einem der vorhergehenden Ansprüche, **dadurch gekennzeichnet, dass** der Positionieranschlag (16) an einem Ende des Falzes angeordnet ist.
